# EUROPÄISCHE PATENTSCHRIFT

(11) **EP 3 515 676 B1**
(45) Veröffentlichungstag und Bekanntmachung des Hinweises auf die Patenterteilung: **24.02.2021**
(21) Anmeldenummer: 17765159.3
(22) Anmeldetag: 08.09.2017
(51) Int. Cl.: B29B 9/10, B01J 2/04, B29B 9/12

(54) **VORRICHTUNG UND VERFAHREN ZUR HERSTELLUNG VON PULVERFÖRMIGEN KUNSTSTOFFEN MIT KUGELFÖRMIGER STRUKTUR**
DEVICE AND METHOD FOR PRODUCING PULVERULENT PLASTICS WITH A SPHERICAL STRUCTURE
DISPOSITIF ET PROCÉDÉ DE PRODUCTION DE MATIÈRES POLYMÉRIQUES PULVÉRULENTES STRUCTURÉES SPHÉRIQUES

(30) Priorität: 21.09.2016 DE 102016117767
(43) Veröffentlichungstag der Anmeldung: 31.07.2019
(73) Patentinhaber: Dressler Group GmbH & Co. KG, 53340 Meckenheim (DE)
(72) Erfinder: DRESSLER, Axel, 53347 Alfter (DE)
(74) Vertreter: Patentanwälte Bauer Vorberg Kayser
(86) Internationale Anmeldenummer: PCT/EP2017/072558
(87) Internationale Veröffentlichungsnummer: WO 2018/054698

(56) Entgegenhaltungen:
- EP-A1- 0 945 173
- WO-A1-2012/160532
- WO-A2-2010/099966
- DE-A1- 2 659 546
- DE-U1-202016 106 243
- US-A- 5 475 984
- US-A1- 2014 000 297
- US-B1- 6 171 433

## Beschreibung

Die Erfindung bezieht sich auf eine Vorrichtung und auf ein Verfahren zur Herstellung von pulverförmigen Kunststoffen, mit möglichst kugelförmiger Struktur.

Ein derartiges Verfahren und eine derartige Vorrichtung sind aus der EP 945 173 B1 bekannt. Dabei wird im Innenraum des Behälters ein Temperaturgefälle mit im Wesentlichen drei Zonen ausgebildet, nämlich von oben nach unten gesehen einer heißen Zone, einer demgegenüber kühleren Fixierzone und einer demgegenüber wiederum kühleren Kühlzone. Dieses Verfahren und die Vorrichtung haben sich grundsätzlich bewährt und werden vielfach eingesetzt. Im Betrieb ist jedoch Immer wieder festgestellt worden, dass sich an der Zuführeinheit Ablagerungen des Produkts ansammeln. Es Ist auch festgestellt worden, dass sich hin und wieder das Produkt an den Wänden des Innenraums niederschlägt.

Die US 6 903 065 B2 beschreibt dieses Dreischichtverfahren gemäß der o.g. europäischen Patentschrift EP 945 173 B1. Das Patent selbst bezieht sich auf die Herstellung von typischen Partikelgrößen von 50 µm bis 300 µm, insbesondere größer als 100 µm.

Aus den deutschen Offenlegungsschriften DE10302979 A1 und DE10339545 A1 und der internationalen Anmeldung WO 2004/067245 A1 des gleichen Anmelders ein Verfahren bekannt, bei dem in einem Extruder eine viskose Ausgangsmasse hergestellt wird, die in einer Verdüsungseinrichtung zu Schmelzetröpfchen versprüht wird. Die Schmelzetröpfchen werden In einer Kühleinrichtung so weit abgekühlt, dass aus der Ausgangsmasse erzeugte Pulverpartikel Im Wesentlichen keine Oberflächenklebrigkelt aufweisen. Der Verdüsungseinrlchtung wird am Düsenausgang Druckluft zugeführt, sie arbeitet daher wie eine Wasserstrahlpumpe. In diesen Schriften Ist auch die DE 197 58 111 A1 genannt und das bel dem Versprühen von Kunststoffen bestehende Problem beschrieben, dass sich höher viskoser Kunststoff nicht so bearbeiten lässt, wie dies die DE 197 58 111 A1 beschreibt, die bevorzugt für die Herstellung von Metallpulvern konzipiert ist. Bei den hohen Temperaturen, bei denen die Kunststoffe eine ausreichend niedrige Viskosität aufweisen würden, würden sie sich bereits chemisch zersetzen. Genau dies will man aber vermeiden. Das Problem beim Versprühen von Kunststoffen liegt daher darin, dass das zu versprühende Produkt höher viskos ist. Es muss bei Temperaturen versprüht werden, durch die es sich chemisch noch nicht verändert wird.

Das US-Patent 6 171 433 B1 arbeitet ebenfalls nach dem Verdüsungsverfahren. Aus US 3 166 613 A und US 3 408 007 A sind Düsen für das Verdüsen von hochviskosen Substanzen, insbesondere Kunststoffen bekannt.

Die US-Patentschrift US 8 883 905 B2 bezieht sich auf ein Pulverbeschichtungsmaterial. Beschrieben werden Kunststoffpartikel, denen Farbstoffpartikel zugeordnet sind. Die Kunststoffpartikel haben eine Korngröße Im Bereich von 5 bis 100 µm, insbesondere 15 bis 60 µm.

Aus WO 2010/099966 A2 sind ist ein Verfahren zur Herstellung eines kosmetischen oder pharmazeutischen Produkts, nicht aber eines pulverförmigen Kunststoffs bekannt. Mehrere Komponenten werden zu dem Produkt verarbeitet. Mindestens eine Komponente wird Im flüssigen Zustand versprüht, abgekühlt und in ein Granulat übergeführt. Das Granulat wird mit den weiteren Komponenten zu dem Produkt verarbeitet. Aus US 2014/0000297 A1 sind ein Verfahren und eine Vorrichtung zur Herstellung von Partikeln aus einer Flüssigkeit oder einer Suspension bekannt. Aus einer Düseneinrichtung wird die Flüssigkeit oder Suspension in Form eines sich verbreiternden Kegels gesprüht. In einer darunter befindlichen Zuführeinheit für ein Cryogas wird dieses In Form eines konvergierenden Kegels ausgestoßen, die Kegel schneiden sich kurz unterhalb der Zuführeinheit. Ein ähnliches Verfahren und eine ähnliche Vorrichtung lehrt auch WO 2012/160532 A1, die sich auch nicht auf pulverförmige Kunststoffe, vielmehr auf Eiscreme oder ähnliche Lebensmittel bezieht. Auch hier wird das Cryogas in das gesprühte Material hinein gesprüht. DE 26 59 546 A1 lehrt ein Verfahren zur Herstellung von gefrorenen Granulaten. In der verwendeten Vorrichtung befindet sich die Zuführeinheit für das Cryogas oberhalb einer Düseneinrichtung für das Produkt, deren Düsen sind in den Kegel aus Cryogas gerichtet. US 5 475 984 A beschreibt ein Verfahren und eine Vorrichtung zur Herstellung von gefrorenen Partikeln, nicht aber pulverförmigen Kunststoffen.

Angestrebt werden mittlere Korngrößen kleiner 500, Insbesondere kleiner 100 µm, z.B. Partikel im Bereich 30 bis 100 µm. Als maximale Obergrenze können 800 µm angegeben werden. Das in der Austragsvorrichtung vorliegende feinkörnige Material kann In einem weiteren Schritt aufbereitet werden, zum Beispiel kann ein Feinstaubanteil, also Partikel kleiner als z.B. 45, 10 bzw. 5 µm, abgetrennt werden. Ein Anteil größer 100 µm kann in einem weiteren Schritt wieder in einen Aufbereitungsvorgang, zum Beispiel einen Mahlvorgang, gegeben werden.

Hiervon ausgehend liegt der Erfindung die Aufgabe zugrunde, die vorbekannten Vorrichtungen und Verfahren, Insbesondere nach der EP 945 173 B1 dahingehend zu verbessern und weiterzuentwickeln, dass Ablagerungen des Produktes an der Zuführeinheit und an den Wänden des Innenraums möglichst vermieden werden und gezielt auf die Größe der erhaltenen kugelförmigen Strukturen Einfluss genommen werden kann.

Diese Aufgabe wird gelöst durch eine Vorrichtung mit den Merkmalen des Anspruchs 1.

Verfahrensmäßig wird die Aufgabe gelöst durch ein Verfahren mit den Merkmalen des Anspruchs 10.

Dabei befindet sich die Zuführeinheit oberhalb oder in gleicher Höhe mit der Düseneinrichtung. Sie ist so angeordnet, dass vermieden wird, dass auf die Zuführeinheit von der Düseneinrichtung kommende Tröpfchen bzw. Partikel auftreffen können. Die heiße Schmelze des Produkts tritt aus der Düseneinrichtung In Form eines Sprühkegels aus, der Cryogasstrom tritt aus der Zuführeinheit in Form eines Kegels, insbesondere Kegelmantels, aus. Dadurch, dass sich der Sprühkegel innerhalb des Kegels befindet, bildet der Cryogasstrom einen Mantel um den Sprühkegel. Es wird so vermieden, dass die Partikel an die Wand des Innenraums gelangen können und dort anhaften können. Dadurch wird die Ausbeute erhöht. Die Zuführeinheit kann auch unterhalb der Düseneinrichtung angeordnet werden, solange sie sich außerhalb des Sprühkegels befindet. Die Anordnung der Zuführeinheit oberhalb der Düseneinrichtung oder zumindest In Nähe der Düseneinrichtung schafft die Möglichkeit eines Mantelstroms des Cryogases. Vorzugsweise ist die Zuführeinheit ringförmig. Der Abstand von der Düseneinrichtung sollte jedoch nicht größer sein als die größte Innenabmessung der Zuführeinheit, insbesondere als der Durchmesser der Zuführeinheit.

Überraschend hat sich herausgestellt, dass die Größe der Tropfen, die aus der Zuführeinheit austreten, mit der Korngröße bzw. Feinheit des gewonnenen Pulvers korreliert. Die Größe der Tropfen ist eine wesentliche Einflussgröße auf die Korngrößenverteilung des Produkts In der Austragsvorrichtung.

Eine rotationssymmetrische Anordnung der Zuführeinheit und der Düseneinrichtung ist bevorzugt. Die Cryogaszufuhr erfolgt vorzugsweise durch ein Ringsystem. In dessen Zentrum bzw. auf einer Mittelachse ist vorzugsweise die Düseneinrichtung angeordnet. Der vertikale Abstand zwischen Zuführeinheit und Düseneinrichtung ist vorzugsweise kleiner als eine Außenabmessung, insbesondere als eine Innenabmessung der Zuführeinheit. Eine freie Innenabmessung der Zuführeinheit Ist vorzugsweise größer als eine Außenabmessung der Düseneinrichtung, gesehen in einer Richtung quer zur Vertikalen.

Der Volumenstrom des Cryogases wird an die abzuführende Wärmemenge des Partikelstroms angepasst, der die Düseneinrichtung verlässt. Der Volumenstrom des Cryogases kann vernebelt oder In Form unterschiedlich großer Tropfen aus der Zuführeinheit und im Behälter vorliegen. Vorzugsweise lässt sich der Volumenstrom durch Druck auf das Cryogas, durch die Anzahl der Austrittsöffnungen und deren Querschnitt einstellen. Vorzugsweise hat die Zuführeinheit in der Größe verstellbare Austrittsöffnungen. Dabei ist es vorteilhaft, wenn die Gesamtfläche aller Austrittsöffnungen stets konstant bleib, jedenfalls plusminus 50 % konstant bleibt, unabhängig von der jeweiligen Größe der Austrittsöffnungen. Auf diese Weise bleibt der Volumenstrom des zugeführten Cryogases unabhängig von der Einstellung des Austrittsquerschnitts der Austrittsöffnungen. Es ist auch möglich, eine Anzahl unterschiedlicher Ringe für die Zuführeinheit vorzusehen und jewells nur einen dieser Ringe austauschbar im Behälter anzuordnen oder mehrere Ringe Im Behälter anzuordnen und nur jeweils einen zu nutzen. Unabhängig von der Ausbildung der Zuführeinheit Ist es vorteilhaft, wenn alle Austrittsöffnungen den gleichen Austrittsquerschnitt haben. Die Partikelgröße ist durch den Querschnitt der Austrittsöffnungen einstellbar. In der praktischen Anwendung liegt dieser vorzugsweise zwischen 0,1 und 8 mm, insbesondere zwischen 2 und 6 mm.

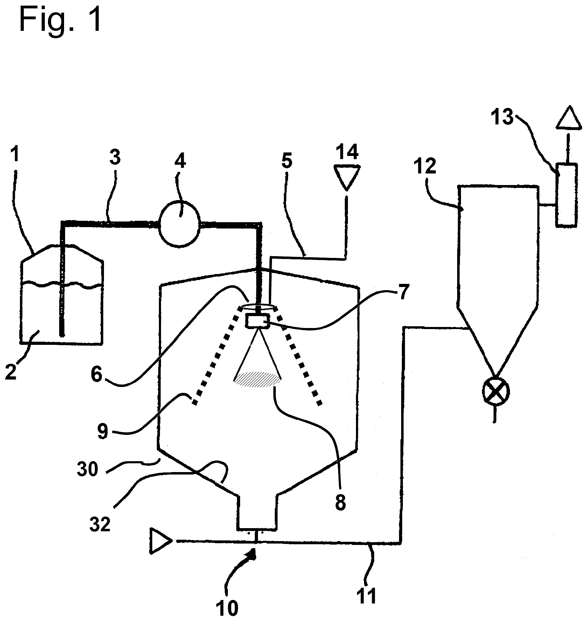

Weitere Vorteile und Merkmale der Erfindung ergeben sich aus den übrigen Ansprüchen sowie der nun folgenden Beschreibung eines nicht einschränkend zu verstehenden Ausführungsbeispiels der Erfindung, das Im Folgenden unter Bezugnahme auf die Zeichnung erläutert wird. Die Zeichnung hat eine einzige Fig. 1, diese zeigt eine schematische Darstellung einer Vorrichtung zur Herstellung von pulverförmigen Kunststoffen mit möglichst kugelförmiger Struktur.

Für die Beschreibung wird eine rechtshändiges, orthogonales x-y-z Koordinatensystem verwendet. Die z-Achse verläuft In der Vertikalen und nach unten. Die x-y Ebene liegt in der Horizontalen.

Aus einem Schmelzebehälter 1 wird das Produkt 2 über eine Förderleitung 3 für heiße Schmelze durch eine Pumpe 4 gefördert. Verwendet werden Temperaturen für das Produkt, die knapp unterhalb der Temperatur liegen, bei denen sich das Produkt chemisch ändert. Es Ist vorteilhaft, die Viskosität des Produktes so klein wie möglich zu wählen, weil dann der Vorgang des Versprühens günstiger durchgeführt werden kann als bei höheren Werten der Viskosität.

Die Förderleitung 3 mündet hinter der Pumpe 4 In einen Behälter 30. Dieser ist im Allgemeinen zylindrisch. Sein Innendurchmesser liegt beispielsweise zwischen 1 und 4, insbesondere 2 und 3 m. Der Behälter 30 kann in seinem Inneren 6-12, Insbesondere 8-10 m hoch sein. Die Achse des Zylinders verläuft parallel zur z-Achse. Der Boden des Behälters 30 ist stumpfkeglig und mündet unten In einen Stutzen, dort ist eine pneumatische Austragsvorrichtung 10 vorgesehen. Der Behälter 30 hat einen Innenraum 32.

Die Förderleitung 3 endet Innerhalb des Behälters 30 In einer Düseneinrichtung 7. Wie man erkennt, hat die Düseneinrichtung 7 keine weiteren Zuleitungen. Das Produkt wird durch die Düse mit dem Druck gepresst, den die Pumpe 4 aufbringt. Die Düseneinrichtung 7 hat In bekannter Weise eine Vielzahl von kleinen Düsenöffnungen. Sie befinden sich an einer Unterfläche der Düseneinrichtung 7 und somit in der x-y Ebene. Die Unterfläche kann gebogen sein. Sie Ist zentrisch zur z-Achse. Aus den Düsenöffnungen tritt das schmelzflüssige Produkt aus, beispielsweise In Form von dünnen Fäden, die sich weiter unten zu Tröpfchen vereinzeln. Im zunehmenden Abstand von den Düsenöffnungen bilden sich die frei fallenden Partikel mehr und mehr rund aus, sie fallen Im Innenraum 32 in z-Richtung herunter.

Von oben durch den oberen Behälterabschluss ist neben der Förderlelstung 3 eine Zuleitung 5 für Cryogas vorgesehen. Dieses kommt aus einer Quelle 14. Als Cryogas kommt je nach Bedarf flüssiger Stickstoff, CO2 oder dergleichen infrage.

Etwas oberhalb der Düseneinrichtung 7 ist eine Zuführeinheit bzw. -richtung 6 für Cryogas im Innenraum 32 angeordnet. Der Abstand In z-Richtung ist kleiner als der Außendurchmesser der Zuführeinheit 6. Diese Ist mit der Zuleitung 5 verbunden und ist als Ringsystem ausgebildet. Sie besteht aus einem zu einem Kreisring geschlossenen Rohr, das an seiner Unterseite eine Vielzahl von Austrittsöffnungen aufweist. Dieser Ring liegt in der x-y Ebene, die Austrittsöffnungen weisen in z-Richtung. Sie können in einem Winkel zur z-Richtung von plusminus 30, insbesondere plusminus 15° orientiert sein. Ein Innendurchmesser der Zuführeinheit 6 Ist größer als der Außendurchmesser der Düseneinrichtung 7, jeweils gemessen in der x-y Ebene. Die Zuführeinheit 6 Ist zentrisch zur Behälterachse und zur z-Achse angeordnet.

Die heiße Schmelze des Produkts tritt aus der Düseneinrichtung 7 In Form eines Sprühkegels 8 im Wesentlichen In z-Richtung aus. Der Cryogasstrom verlässt die Zuführeinheit 6 in Form eines Kegels 9. Sprühkegel 8 und Kegel 9 sind gleichachsig. Der Sprühkegel 8 ist vollständig innerhalb des Kegels 9. Der Sprühkegel 8 und der Kegel 9 sind genauer gesehen stumpfkeglig. Der Kegel 9 Ist so orientiert und hat einen entsprechenden Kegelwinkel, dass er im Wesentlichen auf den Boden des Behälters 30 gerichtet ist. Wenn überhaupt, ist er nur auf einen unteren Teil der Wand des Innenraums 32 gerichtet, beispielsweise die untersten 20 % der Höhe der zylindrischen Wand des Innenraums 32. Der Sprühkegel 8 ist so orientiert, dass er lediglich auf den Boden des Behälters 30 gerichtet Ist. Der Sprühkegel 8 und der Kegel 9 haben eine gemeinsame Achse. In der Figur verläuft die y-Achse rechtwinklig zur Oberfläche des Papiers. Wenn man den Behälter mit seinen Einbauten In der y-z Ebene betrachtet, ändert sich die Darstellung nicht. Anders ausgedrückt ist der Behälter mit seinen Einbauten rotationssymmetrisch, abgesehen von einer möglicherweise nicht rotationssymmetrisch angeordneten Zuleitung 5 und/oder Förderleitung 3.

Aufgrund der ringförmigen Ausbildung der Zuführeinheit 6 tritt das Cryogas in Form eines Kegelmantels aus der Zuführeinheit 6 aus. Insbesondere wird die darunter befindliche Düseneinrichtung 7 nicht direkt vom Cryogas getroffen. Sie befindet sich innerhalb des Kegelmantels. Wenn sich die Zuführeinheit 6 knapp oberhalb oder auf gleicher Höhe mit der Düseneinrichtung 7 befindet, wird vermieden, dass die Düseneinrichtung 7 selbst gekühlt wird, also direkt Cryogas auf sie auftrifft. Die Anordnung von Zuführeinheit 6 und Düseneinrichtung 7 wird so getroffen, dass sich der Kegelmantel außerhalb der Düseneinrichtung 7 befindet und die Zuführeinheit 6 in z-Richtung so nahe der Düseneinrichtung 7 ist, dass weder Cryogas auf die Düseneinrichtung gelangen kann, noch Produkt auf die Zuführeinheit 6.

Aus der pneumatischen Austragsvorrichtung wird das erhaltene Mikro-Kunststoffpulver über eine Leitung 11 einem Feinstgutabscheider 12 zugeleitet, ihm Ist ein Zyklon nachgeschaltet. Am Ausgang ist ein Förderventilator 13 vorgesehen. Dort kann das fertige Produkt entnommen werden.

Die Vorrichtung zur Herstellung von pulverförmigen Kunststoffen mit möglichst kugelförmiger Struktur hat einen Behälter 30, der einen Innenraum 32 begrenzt, eine Düseneinrichtung 7, die in einem oberen Bereich des Innenraums 32 angeordnet ist und die mit einer zuführenden Förderleitung 3 für eine heiße Schmelze des Produkts 2 verbunden Ist, wobei die Schmelze aus der Düseneinrichtung 7 austritt und sich zu kleinen Tröpfchen vereinzelt, die Im Innenraum 32 herunterfallen, eine Zuführeinheit 6 für ein Cryogas, die mehrere Austrittsöffnungen aufweist, denen das Cryogas in überwiegend flüssigem Zustand zugeleitet wird und aus denen ein Cryogasstrom In den Innenraum 32 austritt, welcher In Kontakt mit den kleinen Tröpfchen kommt. Die Zuführeinheit 6 befindet sich oberhalb der oder In gleicher Höhe mit der Düseneinrichtung 7. Verfahrensmäßig tritt die heiße Schmelze des Produkts 2 aus der Düseneinrichtung 7 in Form eines Sprühkegels 8 austritt, der Cryogasstrom tritt aus der Zuführeinheit 6 in Form eines Kegels aus, der Sprühkegel befindet sich innerhalb des Kegels. Der aus der Zuführeinheit 6 austretende Cryogasstrom ist vorzugsweise nicht direkt auf die Düseneinrichtung 7 gerichtet. Er trifft unterhalb der Düseneinrichtung 7 auf den Sprühkegel. 8.

### Bezugszeichenliste

- 1: Schmelzebehälter
- 2: Produkt
- 3: Förderleitung heiße Schmelze
- 4: Pumpe
- 5: Zuführeinrichtung Cyrogas - Zuleitung
- 6: Ringsystem Cryogaszufuhr - Zuführeinheit
- 7: Düseneinrichtung Schmelze
- 8: Sprühkegel
- 9: Kegel
- 10: Pneumatische Austragsvorrichtung
- 11: Leitung
- 12: Feinstgutabscheider
- 13: Förderventilator
- 14: Quelle Cyrogas
- 30: Behälter
- 32: Innenraum

## Patentansprüche

1. Vorrichtung zur Herstellung von pulverförmigen Kunststoffen, mit möglichst kugelförmiger Struktur, wobei eine heisse Schmelze eines Produkts (2) versprüht und abgekühlt wird, mit einem Behälter (30), der einen Innenraum (32) begrenzt, einer Düseneinrichtung (7), die in einem oberen Bereich des Innenraums (32) angeordnet Ist und die mit einer zuführenden Förderleitung (3) für die heiße Schmelze des Produkts (2) verbunden ist, wobei die Schmelze aus der Düseneinrichtung (7) austritt und sich zu kleinen Tröpfchen vereinzelt, die Im Innenraum (32) herunterfallen, einer Zuführeinheit (6) für ein Cryogas, vorzugsweise CO₂ oder N₂, die mehrere, umfangmäßig verteilt angeordnete Austrittsöffnungen aufweist, denen das Cryogas in überwiegend flüssigem Zustand zugeleitet wird und aus denen ein Cryogasstrom in den Innenraum (32) austritt, welcher In Kontakt mit den kleinen Tröpfchen kommt, und einer pneumatischen Austragsvorrichtung (10) im unteren Bereich des Innenraums (32) für ein Austragen des abgekühlten, pulverförmigen Stoffes, **dadurch gekennzeichnet, dass** sich die Zuführeinheit (6) oberhalb oder In gleicher Höhe mit der Düseneinrichtung (7) befindet, dass die heiße Schmelze des Produkts (2) aus der Düseneinrichtung (7) in Form eines Sprühkegels austritt, dass der Cryogasstrom aus der Zuführeinheit (6) in Form eines Kegels austritt, und dass sich der Sprühkegel innerhalb des Kegels des Cryogasstroms befindet.

2. Vorrichtung nach Anspruch 1, **dadurch gekennzeichnet, dass** die Zuführeinheit (6) als Ringsystem ausgebildet ist, vorzugsweise dass die Zuführeinheit (6) einen Durchmesser von 20-100 cm, insbesondere 30-60 cm aufweist.

3. Vorrichtung nach einem der vorangegangenen Ansprüche, **dadurch gekennzeichnet, dass** die Zuführeinheit (6) einen freien Innenraum aufweist, der Innenabmessungen hat, die größer sind als die Außenabmessung der Düseneinrichtung (7), insbesondere einen freien Innendurchmesser aufweist, der größer ist als ein Außendurchmesser der Düseneinrichtung (7).

4. Vorrichtung nach einem der vorangegangenen Ansprüche, **dadurch gekennzeichnet, dass** der Sprühkegel (8) und der Kegel (9) stumpfkeglig sind.

5. Vorrichtung nach dem vorangegangenen Anspruch, **dadurch gekennzeichnet, dass** der Sprühkegel und der Kegel eine gemeinsame Achse haben, und dass die gemeinsame Achse parallel zur z-Achse verläuft.

6. Vorrichtung nach einem der vorangegangenen Ansprüche, **dadurch gekennzeichnet, dass** die Austrittsöffnungen einen freien Querschnitt von 0,1-8 mm, insbesondere 2-6 mm aufweisen.

7. Vorrichtung nach einem der vorangegangenen Ansprüche, **dadurch gekennzeichnet, dass** die Zuführeinheit (6) verstellbare Austrittsöffnungen aufweisen, wobei die Größe des freien Querschnitts in Stufen oder stufenfrei verstellbar ist.

8. Vorrichtung nach einem der vorangegangenen Ansprüche, **dadurch gekennzeichnet, dass** die Düseneinrichtung (7) nur mit der Förderleitung (3) verbunden ist, oder dass die Düseneinrichtung (7) zusätzlich noch mit einer zweiten Leitung verbunden ist, durch die insbesondere Druckluft strömt.

9. Vorrichtung nach einem der vorangegangenen Ansprüche, **dadurch gekennzeichnet, dass** in der Förderleitung (3) eine Pumpe angeordnet ist.

10. Verfahren zur Herstellung von pulverförmigen Kunststoffen, mit möglichst kugelförmiger Struktur, indem eine heisse Schmelze eines Produkts (2) versprüht und abgekühlt wird, mit folgenden Verfahrensschritten:
a) Bereitstellen eines Behälters (30), der einen Innenraum (32) begrenzt,
b) Bereitstellen einer Düseneinrichtung (7) und Anordnen der Düseneinrichtung (7) In einem oberen Bereich des Innenraums (32), Zuführen der heißen Schmelze des Produkts zur Düseneinrichtung (7), aus der das Produkt zu kleinen Tröpfchen vereinzelt austritt, und die Tröpfchen im Innenraum (32) herunterfallen,
c) Bereitstellen einer Zuführeinheit (6) für ein Cryogas, vorzugsweise CO₂ oder N₂, die sich oberhalb oder in gleicher Höhe mit der Düseneinrichtung (7) befindet, und die mehrere, umfangmäßig verteilt angeordnete Austrittsöffnungen aufweist, denen das Cryogas in überwiegend flüssigem Zustand zugeleitet wird und aus denen ein Cryogasstrom In den Innenraum (32) austritt, welcher in Kontakt mit den kleinen Tröpfchen kommt, und
d) Bereitstellen einer pneumatischen Austragsvorrichtung (10) für ein Austragen des abgekühlten, pulverförmigen Stoffes und Anordnen der Austragsvorrichtung (10) Im unteren Bereich des Innenraums (32),
wobei die heiße Schmelze des Produkts (2) aus der Düseneinrichtung (7) in Form eines Sprühkegels austritt, der Cryogasstrom aus der Zuführeinheit (6) In Form eines Kegels austritt, und sich der Sprühkegel innerhalb des Kegels des Cryogasstroms befindet.

11. Verfahren nach Anspruch 10, **dadurch gekennzeichnet, dass** die heiße Schmelze der Düseneinrichtung (7) unter Überdruck zugeführt wird.

12. Verfahren nach Anspruch 10 oder 11, **dadurch gekennzeichnet, dass** der aus der Zuführeinheit (6) austretende Cryogasstrom nicht direkt auf die Düseneinrichtung (7) gerichtet ist.

## Claims

1. A device for producing pulverulent plastics with as spherical a structure as possible, wherein a hot melt of a product (2) is sprayed and cooled off, comprising a container (30) delimiting an interior space (32), a nozzle device (7), which is disposed in an upper region of the interior space (32) and which is connected to a supplying conveyor pipe (3) for the hot melt of the product (2), wherein the melt exits the nozzle device (7) and separates into small droplets that fall downward in the interior space (32), a supply unit (6) for a cryogas, preferably CO₂ or N₂, having several outlet openings, which are disposed in a circumferentially distributed manner and to which the cryogas is supplied in a predominantly liquid state, and which a cryogas flow, which comes into contact with the small droplets, exits into the interior space (32), and a pneumatic discharge device (10) in the lower region of the interior space (32) for discharging the cooled-off, pulverulent substance, **characterized in that** the supply unit (6) is located above or at the same level as the nozzle device (7), that the hot melt of the product (2) exits the nozzle device (7) in the shape of a spray cone, that the cryogas flow exits the supply unit (6) in the shape of a cone, and that the spray cone is located within the cone of the cryogas flow.

2. The device according to claim 1, **characterized in that** the supply unit (6) is configured as a ring system, preferably, that the supply unit (6) has a diameter of 20-100 cm, in particular 30-60 cm.

3. The device according to any one of the preceding claims, **characterized in that** the supply unit (6) has a free interior space having internal dimensions greater than the external dimensions of the nozzle device (7), in particular has a free internal diameter greater than an external diameter of the nozzle device (7).

4. The device according to any one of the preceding claims, **characterized in that** the spray cone (8) and the cone (9) have the shape of a truncated cone.

5. The device according to the preceding claim, **characterized in that** the spray cone and the cone have a common axis, and that the common axis extends parallel to the z-axis.

6. The device according to any one of the preceding claims, **characterized in that** the outlet openings have a free cross section of 0.1-8 mm, in particular 2-6 mm.

7. The device according to any one of the preceding claims, **characterized in that** the supply unit (6) has adjustable outlet openings, wherein the size of the free cross section can be adjusted in a stepped or continuous manner.

8. The device according to any one of the preceding claims, **characterized in that** the nozzle device (7) is connected only to the conveyor pipe (3), or that the nozzle device (7) is additionally also connected to a second pipe through which, in particular, compressed air flows.

9. The device according to any one of the preceding claims, **characterized in that** a pump is disposed in the conveyor pipe (3).

10. A method for producing pulverulent plastics with as spherical a structure as possible, by a hot melt of a product (2) being sprayed and cooled off, comprising the following method steps:
a) providing a container (30) delimiting an interior space (32),
b) providing a nozzle device (7) and disposing the nozzle device (7) in an upper region of the interior space (32), supplying a hot melt of the product to the nozzle device (7), which the product, separated into small droplets, exits, and the droplets fall downward in the interior space (32),
c) providing a supply unit (6) for a cryogas, preferably CO₂ or N₂, which is located above or at the same level as the nozzle device (7) and which has several outlet openings, which are disposed in a circumferentially distributed manner and to which the cryogas is supplied in a predominantly liquid state, and which a cryogas flow, which comes into contact with the small droplets, exits into the interior space (32), and
d) providing a pneumatic discharge device (10) for discharging the cooled-off, pulverulent substance, and disposing the discharge device (10) in the lower region of the interior space (32),
wherein the hot melt of the product (2) exits the nozzle device (7) in the shape of a spray cone, the cryogas flow exits the supply unit (6) in the shape of a cone, and the spray cone is located within the cone of the cryogas flow.

11. The method according to claim 10, **characterized in that** the hot melt is supplied to the nozzle device (7) under overpressure.

12. The method according to claim 10 or 11, **characterized in that** the cryogas flow exiting the supply unit (6) is not directly directed towards the nozzle device (7).

## Revendications

1. Dispositif de production de matières plastiques pulvérulentes ayant, si possible, une structure sphérique, dans lequel une masse fondue chaude d'un produit (2) est pulvérisée et refroidie, comprenant un récipient (30) qui délimite un intérieur (32), un dispositif à buse (7) qui est disposé dans une zone supérieure de l'intérieur (32) et qui est reliée à une conduite de refoulement d'alimentation (3) pour la masse fondue chaude du produit (2), dans lequel la masse fondue sort du dispositif à buse (7) et est isolé en petites gouttelettes qui tombent dans ledit intérieur (32), une unité d'alimentation (6) pour un cryogaz, de préférence du CO₂ ou du N₂, qui présente une pluralité d'ouvertures de sortie réparties circonférentiellement auxquelles le cryogaz est amené à l'état majoritairement liquide et par lesquelles un courant de cryogaz sort dans l'intérieur (32), qui entre en contact avec les petites gouttelettes, ainsi qu'un dispositif d'évacuation (10) pneumatique dans la zone inférieure de l'intérieur (32) qui est destiné à évacuer la substance pulvérulente refroidie, **caractérisé par le fait que** l'unité d'alimentation (6) se trouve au-dessus ou à la même hauteur que le dispositif à buse (7), que la masse fondue chaude du produit (2) sort du dispositif à buse (7) sous la forme d'un cône de pulvérisation, que le courant de cryogaz sort de l'unité d'alimentation (6) sous la forme d'un cône, et que le cône de pulvérisation est situé à l'intérieur du cône du courant de cryogaz.

2. Dispositif selon la revendication 1, **caractérisé par le fait que** l'unité d'alimentation (6) est conçue en tant que système annulaire, de préférence que l'unité d'alimentation (6) présente un diamètre compris entre 20 et 100 cm, en particulier entre 30 et 60 cm.

3. Dispositif selon l'une quelconque des revendications précédentes, **caractérisé par le fait que** l'unité d'alimentation (6) présente un intérieur libre qui présente des dimensions intérieures qui sont supérieures aux dimensions extérieures du dispositif à buse (7), en particulier présente un diamètre intérieur libre qui est supérieur à un diamètre extérieur du dispositif à buse (7).

4. Dispositif selon l'une quelconque des revendications précédentes, **caractérisé par le fait que** le cône de pulvérisation (8) et le cône (9) sont tronconiques.

5. Dispositif selon la revendication précédente, **caractérisé par le fait que** le cône de pulvérisation et le cône ont un axe commun et que ledit axe commun s'étend parallèlement à l'axe z.

6. Dispositif selon l'une quelconque des revendications précédentes, **caractérisé par le fait que** les ouvertures de sortie présentent une section transversale libre comprise entre 0,1 et 8 mm, en particulier entre 2 et 6 mm.

7. Dispositif selon l'une quelconque es revendications précédentes, **caractérisé par le fait que** l'unité d'alimentation (6) présente des ouvertures de sortie réglables, la taille de la section transversale libre étant réglable par paliers ou en continu.

8. Dispositif selon l'une quelconque des revendications précédentes, **caractérisé par le fait que** le dispositif à buse (7) n'est relié qu'à la conduite de refoulement (3), ou que le dispositif à buse (7) est relié en sus encore à une deuxième conduite à travers laquelle s'écoule en particulier de l'air comprimé.

9. Dispositif selon l'une quelconque des revendications précédentes, **caractérisé par le fait qu'**une pompe est disposée dans la conduite de refoulement (3).

10. Procédé de production de matières plastiques pulvérulentes ayant, si possible, une structure sphérique, en pulvérisant et en refroidissant une masse fondue chaude d'un produit (2), comprenant les étapes de procédé suivantes:
a) fournir un récipient (30) qui délimite un intérieur (32),
b) fournir un dispositif à buse (7) et disposer le dispositif à buse (7) dans une zone supérieure de l'intérieur (32), amener la masse fondue chaude du produit au dispositif à buse (7) d'où sort le produit en étant isolé en petites gouttelettes, et les gouttelettes tombent dans l'intérieur (32),
c) fournir une unité d'alimentation (6) pour un cryogaz, de préférence du CO₂ ou du N₂, qui est située au-dessus ou à la même hauteur que le dispositif à buse (7) et qui présente une pluralité d'ouvertures de sortie réparties circonférentiellement auxquelles le cryogaz est amené à l'état majoritairement liquide et par lesquelles un courant de cryogaz sort dans l'intérieur (32), qui entre en contact avec les petites gouttelettes, et
d) fournir un dispositif d'évacuation (10) pneumatique destiné à évacuer la substance pulvérulente refroidie, et disposer le dispositif d'évacuation (10) dans la zone inférieure de l'intérieur (32),
dans lequel la masse fondue chaude du produit (2) sort du dispositif à buse (7) sous la forme d'un cône de pulvérisation, le courant de cryogaz sort de l'unité d'alimentation (6) sous la forme d'un cône, et le cône de pulvérisation est situé à l'intérieur du cône du courant de cryogaz.

11. Procédé selon la revendication 10, **caractérisé par le fait que** la masse fondue chaude est amenée sous surpression au dispositif à buse (7).

12. Procédé selon la revendication 10 ou 11, **caractérisé par le fait que** le courant de cryogaz sortant de l'unité d'alimentation (6) n'est pas dirigé directement sur le dispositif à buse (7).
